# EUROPÄISCHE PATENTSCHRIFT

(11) **EP 1 966 296 B1**
(45) Veröffentlichungstag und Bekanntmachung des Hinweises auf die Patenterteilung: **23.06.2010**
(21) Anmeldenummer: 06818989.3
(22) Anmeldetag: 06.12.2006
(51) Int. Cl.: C08K 9/04, C08L 69/00

(54) **POLYCARBONAT-FORMMASSEN**
POLYCARBONATE MOULDING COMPOSITIONS
MASSES DE MOULAGE A BASE DE POLYCARBONATE

(30) Priorität: 17.12.2005 DE 102005060463
(43) Veröffentlichungstag der Anmeldung: 10.09.2008
(73) Patentinhaber: Bayer MaterialScience AG, 51368 Leverkusen (DE)
(72) Erfinder: WENZ, Eckhard, 50679 Köln (DE); PEUCKER, Uwe, 40547 Düsseldorf (DE); ECKEL, Thomas, 41540 Dormagen (DE); WITTMANN, Dieter, 51375 Leverkusen (DE); NENNEMANN, Arno, 51469 Bergisch Gladbach (DE); BUCHHOLZ, Vera, 50823 Köln (DE)
(86) Internationale Anmeldenummer: PCT/EP2006/011694
(87) Internationale Veröffentlichungsnummer: WO 2007/068384

(56) Entgegenhaltungen:
- WO-A-99/43747
- US-A- 5 747 575
- US-A1- 2005 137 287
- US-B1- 6 238 793

## Beschreibung

Die Erfindung betrifft Polycarbonat-Zusammensetzungen mit einer verbesserten thermischen Stabilität und einer niedrigeren maximalen Zersetzungsgeschwindigkeit im Brandfalle.

PC/ABS-Zusammensetzungen (Polycarbonat/Acrylnltril/Butadien/Styrol) mit erhöhter thermischer Stabilität werden von Wang et al. berichtet. Hier werden Alkylammonium-Montmorillonite eingesetzt, die sich bevorzugt in der ABS-Phase verteilten (Wang, S., Hu, Y., Wang, Z., Yong, T., Chen, Z., & Fan, W., Synthesis and Characterization of polycarbonate/ABS/montmorillonite nanocomposites, Polymer Degradation and Stability, 80, no. 1, (2003) 157-61).

Aus Stretz et al. und Yoon et al. ist bekannt, dass die üblichen Alkylammonium-Modifikatoren wie Talgfett-bis(2-hydroxyethyl)methylammonium sowie enthaltene Verunreinigungen (beispielsweise Eisen-Ionen) die Polycarbonat-Matrix zersetzen und beispielsweise die Wärmefreisetzungsgeschwindigkeit (bestimmt mittels Cone Calorimetrie) erhöhen (Stretz, H. A., Koo, J. H., Dimas, V. M., & Zhang, Y., Flame retardant properties of polycarbonate/montmorillonite clay nanocomposite blends, Polymer Preprints, 42, no. 2, (2001) 50; Yoon, P. J., Hunter, D. L., & Paul, D. R., Polycarbonate nanocomposites: Part 2. Degradation and color formation, Polymer, 44, no. 18, (2003) 5341-54).

Der synergistische Effekt von Alkylammonium-Montmorilloniten für die Flammschutzeigenschaften ist aus Wang et al. für ABS-Formmassen bekannt (Wang, S., Hu, Y., Zong, R., Tang, Y., Chen, Z., & Fan, W., Preparation and characterization of flame retardant ABS/montmorillonite nanocomposite. Applied Clay Science, 25, no. 1-2, (2004) 49-55). Wang et al. erreichen verbesserte Flammschutzeigenschaften für ABS-Formteile in Kombination mit Antimonoxid und Decabromdiphenyloxid. In Gegenwart des Alkylammonium-Montmorillonites wurde die Wärmefreisetzungsrate (Cone-Kalorimeter) herabgesetzt und eine längere Zeit bis zur Entzündung gefunden, d.h. der LOI (Limiting oxygen index) lag höher und das Brandverhalten der Proben wurde im UL94 V Test mit der Klassifikation V-0 bewertet.

Aus WO 99/43747 A1 ist der synergistische Effekt für die Flammschutzeigenschaften von Alkylammonium-Montmorilloniten für PC/ABS-Zusammensetzungen bekannt und lehrt, dass die Zeit bis zur Entzündung von PC/ABS-Zusammensetzungen durch Zusatz des Alkylammonium-Montmorillonites Clayton HY verlängert wird.

Nachteil der Alkylammonium-modifizierten Montmorillonite sind das aufwendige und kostspielige Modifizierungsverfahren des Schichtsilicates. Derartig modifizierte Schichtsilicate wirken sich auch nachteilig auf die physikalischen Eigenschaften von Polycarbonat-Zusammensetzungen aus, da die basischen Modifikatoren des Schichtsilicates das Polymer abbauen und somit zu einer Verringerung des Molekulargewichts des Polymers, sowie zu Trübung und Verfärbung führen. In dem offenbarten Verfahren wird mit unmodifizierten Schichtsilicaten gearbeitet.

Aus US 2005/0137287 A1 sind Polycarbonat-Zusammensetzungen bekannt, welche Schichtsilicate enthalten, die mit einem Blockcopolymer aus 2-(Dimethylamino)-Styrol-Ethylmethacrylat mit einer quartemären Ammoniumkopfgruppe modifiziert sind. Die resultierenden Polycarbonat-Formmassen sind transparent und zeigen keine Verfärbung.

Aus WO 99/07790 A1 und aus Fischer et al. (Fischer, H. R., Gielgens, L. H., & Koster, T. P. M., Nanocomposites from polymers and layered minerals, Mat. Res. Soc. Proc. Vol 519, 1998, 117-123) sind Nanocomposit-Materialien bekannt, welche aus Block- oder Pfropfcopolymeren und einem Schichtsilicat bestehen, wobei das Copolymer eine strukturelle Einheit trägt, die mit dem Schichtsilicat kompatibel ist sowie eine weitere Einheit, die mit der Polymermatrix kompatibel ist. Die beschriebenen Kompositmaterialien werden hergestellt in einem ersten Schritt durch Mischen von Schichtsilicat mit Copolymer bei erhöhter Temperatur und in einem nachfolgenden Schritt durch Extrusion in der angestrebten Polymermatrix. Alternativ kann auch ein Lösungsmittel hinzugefügt werden. Es wird so eine Verbesserung der Zugfestigkeit des modifizierten Materials erreicht. Nicht beschrieben sind PC/ABS-Zusammensetzungen und Modifizierungsverfahren der Schichtsilicate über den wässrigen Weg.

Nachteile der Modifizierung mittels Blockcopolymere sind das aufwendige und kostspielige Modifizierungsverfahren sowie die Notwendigkeit eines zusätzlichen Verfahrensschrittes zur Blockcopolymer-Synthese.

Die der Erfindung zugrunde liegende Aufgabe besteht darin, Polycarbonat-Formmassen mit einer hohen thermischen Stabilität, einer niedrigen maximalen Zersetzungsgeschwindigkeit nach Entzündung sowie einer niedrigen Rauchgasdichte bereitzustellen.

Überraschend wurde gefunden, dass durch den Einsatz von Schichtsilicaten, welche mittels eines lösungsmittelfreien Schmelzeprozesses mit Polyalkylenoxid mit einem zahlen mittleren Molekulargewicht von 106 bis 20 000 g/mol modifiziert sind, die thermische Stabilität Polycarbonat-haltiger Formmassen erhöht und die maximale Zersetzungsgeschwindigkeit im Brandfall erniedrigt werden. Die erfindungsgemäßen Zusammensetzungen zeichnen sich dadurch aus, dass keine langkettigen quartemären Ammoniumsalze als Stabilisatoren eingesetzt werden und ein Molekulargewichtsabbau des Polycarbonates vermieden wird, was auch in einem hohen mechanischen Eigenschaftsniveau der erfindungsgemäßen Formmassen resultiert.

Gegenstand der vorliegenden Erfindung sind daher Zusammensetzungen bzw. thermoplastische Formmassen enthaltend
A) ein aromatisches Polycarbonat und/oder Polyestercarbonat,
B) gegebenenfalls einen Schlagzähmodifikator,
C) gegebenenfalls ein thermoplastisches Homo- und/oder Copolymer,
D) eine Schichtverbindung, welche mittels eines lösungsmittelfreien Schmelzeprozesses mit Polyalkylenoxid mit einem zahlen mittleren Molekulargewicht von 106 bis 20000 g/mol modifiziert ist, und
E) gegebenenfalls eine Phosphorverbindung.

Vorzugsweise enthalten die erfindungsgemäßen Zusammensetzungen
A) 30 bis 99,9 Gew.-Teile, bevorzugt 40 bis 90 Gew.-Teile aromatisches Polycarbonat und/oder Polyestercarbonat,
B) 0 bis 60 Gew.-Teile, bevorzugt 1 bis 40 Gew.-Teile, besonders bevorzugt 2 bis 15 Gew.-Teile eines kautschukmodifizierten Pfropfpolymerisats,
C) 0 bis 30 Gew.-Teile, bevorzugt 0 bis 25 Gew.-Teile Homo- und/oder Copolymer,
D) 0,1 bis 40 Gew.-Teile, bevorzugt 1 bis 25 Gew.-Teile, besonders bevorzugt 2 bis 10 Gew.-Teile einer Schichtverbindung, welche mittels eines lösungsmittelfreien Schmelzeprozesses mit Polyalkylenoxid mit einem zahlen mittleren Molekulargewicht von 106 bis 20 000 g/mol modifiziert ist, und
E) 0 bis 30 Gew.-Teile, vorzugsweise 1 bis 20 Gew.-Teile, insbesondere 4 bis 15 Gew.-Teile Phosphorverbindung.

Alle Gewichtsteilangaben in der vorliegenden Anmeldung sind so normiert, dass die Summe der Gewichtsteile der Komponenten A + B + C + D + E in der Zusammensetzung auf 100 normiert ist.

Die erfindungsgemäß geeigneten Komponenten der Polycarbonat-Zusammensetzungen werden nachfolgend beispielhaft erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 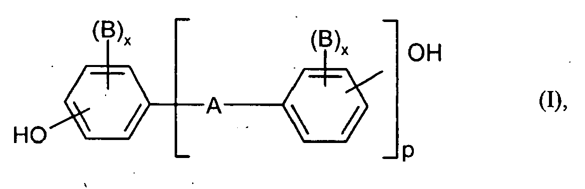 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 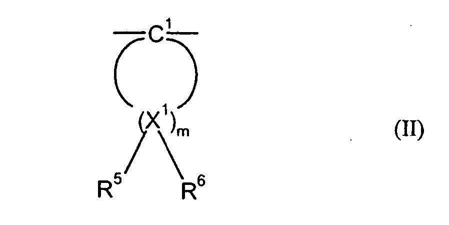 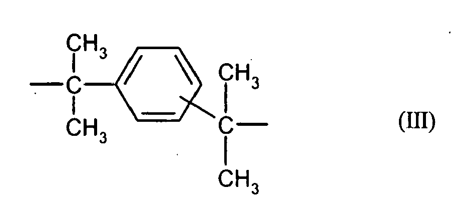
- B: jeweils C₁ bis C₁₂-Alkyl-, vorzugsweise Methyl, Halogen, vorzugsweise Chlor und/oder Brom,
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cydohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,35 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
- B.1: 5 bis 95, vorzugsweise 30 bis 90 Gew.-%, wenigstens eines Vinylmonomeren auf
- B.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind vorzugsweise Gemische aus
- B.1.1: 50 bis 99 Gew.-Teilen Vinylaromaten und/oder kernsubstituierten Vinylaromaten (wie Sty-rol, α-Methylstyrol, p-Methylstyrol, p-Chlorstyrol) und/oder Methacrylsäure-(C₁-C₈)-Alkylester, wie Methylmethacrylat, Ethylmethacrylat), und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -10°C liegt. Besonders bevorzugt ist reiner Polybutadienkautschuk.

Besonders bevorzugte Polymerisate B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat Triallylisocyanurat, Triacryloylhexahydro-s-triazin, Triallylbenzole. Die Menge der vernetzenden Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Pfropfpolymerisate können in der erfindungsgemäßen Zusammensetzung in einer Menge von 0,5 bis 60, vorzugsweise 1 bis 40 und in am meisten bevorzugter Weise 2 bis 25 Gewichtsteilen eingesetzt werden. Es können auch Mischungen verschiedener Pfropfpolymerisate vorliegen.

### Komponente C

Die Komponente C umfasst ein oder mehrere thermoplastische Vinyl(Co)Polymerisate C.1 und/oder Polyalkylenterephthalate C.2.

Geeignet sind als Vinyl(Co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- C.1.1: 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
- C.1.2: 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate C.1 sind harzartig, thermoplastisch und kautschukfrei. Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und αliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4- und/oder Propandiol-1,3-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die Vinyl(co)polymerisate oder Polyalkylenterephtalate können in Mengen von 0 bis 45, vorzugsweise 1 bis 30 und besonders bevorzugt 2 bis 25 Gewichtsteilen in der erfindungsgemäßen Zusammensetzung enthalten sein.

### Komponente D

Die Komponente D umfasst Schichtverbindungen, welche mittels eines lösungsmittelfreien Schmelzeprozesses mit Polyalkylenoxid mit einem zahlen mittleren Molekular- gewicht von 106 bis 20 000 g/mol modifiziert sind.

Schichtverbindungen im erfindungsgemäßen Sinne sind bevorzugt Schichtverbindungen, die in einer Dimension nanoskalig, d.h. kleiner 100 nm sind. Diese Dimension wird im folgenden als "mittlere Dicke" der Schichtverbindung bezeichnet. Bevorzugt werden diejenigen Schichtverbindungen eingesetzt, welche eine mittlere Dicke von 0,3 bis 10 nm, besonders bevorzugt von 0,5 bis 10 nm, insbesondere bevorzugt von 0,7 bis 2 nm aufweisen. Die Schichten weisen einen Durchmesser von 5 bis 10000 nm, bevorzugt von 10 bis 2000 nm, besonders bevorzugt von 10 bis 1000 nm auf. Die Kationenaustauchkapazitäten der anionischen, unmodifizierten Schichtverbindungen liegen zwischen 10 und 260 meq / 100 g. Gegenionen (d.h. Kation) der unmodifizierten Schichtverbindungen können Calcium-, Magnesium, Kalium-, Natrium-, Lithium-Ionen sein, bevorzugt Natrium- oder Lithiumionen. Diese Kationen können beispielsweise entweder aus natürlichen (geologischen) Quellen stammen, in den kommerziellen Mineralen enthalten sein, oder durch Ionenaustausch wie von Lagaly beschrieben (Lagaly, G., Reaktionen der Tonminerale. In Tonminerale und Tone, Steinkopff Verlag, Darmstadt, 1993) gezielt eingebracht werden. Die Ausmaße der Schichtverbindungen (d.h. Durchmesser bzw. die mittlere Dicke der Schichten der Schichtverbindung) lassen sich über TEM-Aufnahmen und XRD-Messungen ermitteln: Die Bestimmung der Kationenaustauchkapazität kann beispielsweise nach L. P. Meier und G. Kahr (Clays & Clay Minerals, 1999, 47, 3, S. 386 - 388) erfolgen.

Als Schichtverbindungen werden hierzu synthetische als auch natürlich vorkommende Schichtverbindungen eingesetzt. Bevorzugt werden Schichtverbindungen des Mineraltyps Montmorillonit, Hectorit, sowie die Schichtsilicate bzw. Tonminerale Allevardit, Amesit, Beidellit, Fluorhectorit, Fluorvermiculit, Glimmer, Halloysit, Hectorit, Illit, Montmorillonit, Muscovit, Nontronit, Palygorskit, Saponit, Sepiolit, Smectit, Stevensit, Talkum, Vermicullit, synthetische Talkum-Typen und die Alkalisilicate Maghemit, Magadiit, Kenyait, Makatit, Silinait, Grumantit, Revdit sowie deren hydratisierte Formen und die zugehörigen kristallinen Kieselsäuren oder andere anorganische Schichtverbindungen wie Hydrotalcite, Doppelhydroxide und Heteropolysäuren eingesetzt.

Als Schichtverbindungen werden besonders bevorzugt Silikat-haltige Schichtverbindungen eingesetzt. Insbesondere bevorzugt sind Silikat-haltige Schichtverbindungen des Mineraltyps Montmorillonit, wie als Hauptbestandteil im Bentonit enthalten, sowie Hectorit eingesetzt, die eine Kationenaustauchkapazität zwischen 10 und 260 meq / 100 g, eine mittlere Dicke von 0,3 bis 10 nm, besonders bevorzugt von 0,5 bis 10 nm, insbesondere bevorzugt von 0,7 bis 2 nm und einen Durchmesser der Schichten von 5 bis 10000 nm, bevorzugt von 10 bis 2000 nm, besonders bevorzugt von 10 bis 1000 nm aufweisen.

Erfindungsgemäß ist die Schichtverbindung mittels eines lösungsmittelfreien Schmelzeprozesses mit mindestens Polyalkylenoxid mit einem zahlen mittleren Molekulargewicht von 106 bis 20 000 g/mol modifiziert: Hierbei wird
(i) in einem ersten Schritt die Schichtverbindung mit Polyalkylenoxid mit einem zahlen mittleren Molekulargewicht von 106 bis 20 000 g/mol oder einer Mischung aus Polyalkylenoxid mit einem zahlen mittleren Molekulargewicht von 106 bis 20 000 g/mol und weiteren organischen Polymeren vermischt,
(ii) in einem zweiten Schritt wird die Mischung auf eine Temperatur oberhalb der Schmelztemperatur des eingesetzten Polyalkylenoxid mit einem zahlen mittleren Molekulargewicht von 106 bis 20 000 g/mol bzw. der eingesetzten Polymermischung aus Polyalkylenoxid mit einem zahlen mittleren Molekulargewicht von 106 bis 20 000 g/mol und mindestens einem weiteren organischen Polymer erhitzt, vorzugsweise unter ständiger Vermischung, beispielsweise mittels eines internen Kneters oder eines Extruders, und
(iii) gegebenenfalls wird in einem dritten Schritt wird die Mischung aus (ii) auf Raumtemperatur abgekühlt und die modifizierte Schichtverbindung in Form eines Feststoffs erhalten.

Alternativ kann die erhitzte Mischung, welche aus Schritt (ii) resultiert, als solches in die erfindungsgemäße Polycarbonat-Zusammensetzung eingebracht werden, zum Beispiel über einen Seitenextruder.

Zu dieser Modifizierung werden als organische Polymere Polyalkylenoxide eingesetzt. Diese Polyalkylenoxide weisen ein zahlenmittleres Molekulargewicht von 106 bis 20000 g/mol, besonders bevorzugt von 200 bis 10000 g/mol auf, wobei auch Mischungen verschiedener Polyalkylenoxide eingesetzt werden können. Als Polyalkylenoxide werden bevorzugt Polyethylenoxide und Polyethylenoxidpropylenoxid-Copolymere eingesetzt. Besonders bevorzugt werden lineare Polyethylenoxide eingesetzt und ganz besonders bevorzugt Poly-(ethylenglykol)-monomethylether.

Gegebenenfalls können in Schritt (i) auch noch weitere geeignete Oligomere oder Polymere zugefügt werden. Vorzugsweise wird hierfür Polycarbonat (Komponente A) und/oder Polymethylmethacrylat (PMMA) eingesetzt.

### Komponente E

Phosphorhaltige Flammschutzmittel (E) im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV) 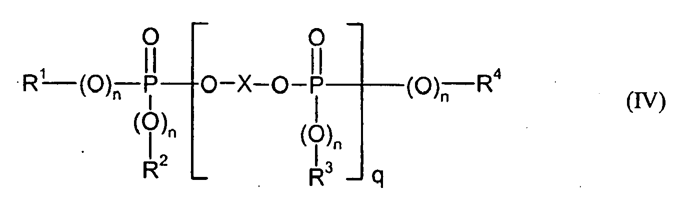 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30. Bei Einsatz von Mischungen verschiedener Komponenten der Formel (IV) können Mischungen vorzugsweise mit zahlengemittelten q-Werten von 0,3 bis 20, besonders bevorzugt 0,5 bis 10, insbesondere 0,5 bis 6 verwendet werden.
- X: steht besonders bevorzugt für 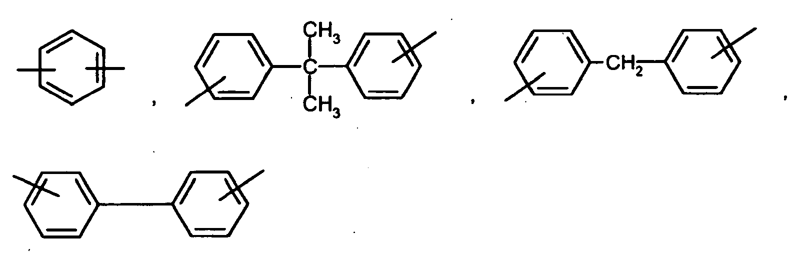
oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestem der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des weiteren lässt sich mit diesen Flammschutzmitteln eine besonders hohe Wärmeformbeständigkeit erzielen.

Als erfindungsgemäße Komponente E können Monophosphate (q=O), Oligophosphate (q=1-30) oder Mischungen aus Mono- und Oligophosphaten eingesetzt werden.

Monophosphorverbindungen der Formel (IV) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Komponente E Formel (IV) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (V)

A_{3-y}-NB¹_{y} (V)

in welcher
- A: für einen Rest der Formel (Va) 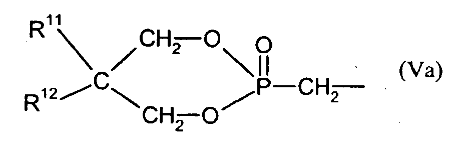 oder (Vb) 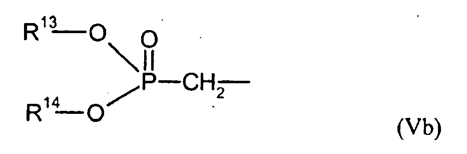 steht,
R¹¹ und R¹² unabhängig voneinander für unsubstituiertes oder substituiertes C₁-C₁₀-Alkyl oder für unsubstituiertes oder substituiertes C₆ bis C₁₀-Aryl, stehen,
R¹³ und R¹⁴ unabhängig voneinander für unsubstituiertes oder substituiertes C₁ bis C₁₀-Alkyl oder unsubstituiertes oder substituiertes C₆ bis C₁₀-Aryl stehen oder
R¹³ und R¹⁴ zusammen für unsubstituiertes oder substituiertes C₃ bis C₁₀-Alkylen stehen,
- y: die Zahlenwerte 0, 1 oder 2 bedeuten und
- B¹: unabhängig für Wasserstoff, gegebenenfalls halogeniertes C₂ bis C₈-Alkyl, unsubstituiertes oder substituiertes C₆ bis C₁₀-Aryl steht.
- B¹: steht vorzugsweise unabhängig für Wasserstoff, für Ethyl, n- oder iso-Propyl, welche durch Halogen substituiert sein können, unsubstituiertes oder durch C₁ bis C₄-Alkyl und/oder Halogen substituiertes C₆ bis C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sek. oder tert.-Butyl, Pentyl oder Hexyl.

Substituiertes Alkyl in R¹¹, R¹², R¹³ und R¹⁴ steht unabhängig vorzugsweise für durch Halogen substituiertes C₁ bis C₁₀-Alkyl, insbesondere für ein- oder zweifach substituiertes Methyl, Ethyl, n-Propyl, iso-Propyl, n-, iso-, sek. oder tert.-Butyl, Pentyl oder Hexyl.

C₆ bis C₁₀-Aryl steht in R¹¹, R¹², R¹³ und R¹⁴ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

R¹³ und R¹⁴ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris(1,3,2-dioxaphosphorinan-methan)amino-2,2',2"-trioxid der Formel (Va-1)

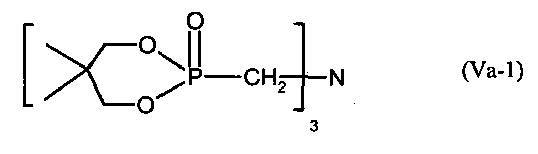

1,3,2-Dioxaphosphorinan-2-methanamin, N-butyl-N[(5,5-dimethyl-1,3,2-dioxaphosphorinan-2-yl)methyl]-5,5-dimethyl-, P,2-dioxid; 1,3,2-Dioxaphosphorinan-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxid; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

Bevorzugt sind weiterhin:
Verbindungen der Formel (Va-2) oder (Va-3) 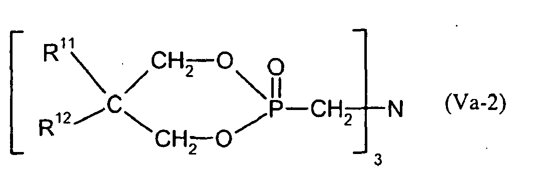 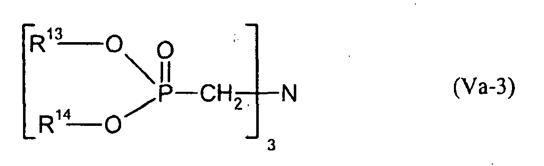
wobei
R¹¹, R¹², R¹³ und R¹⁴ die oben angegebenen Bedeutungen haben.

Besonders bevorzugt sind Verbindungen der Formel (Va-2) und (Va-1). Die Herstellung der Phosphonatamine ist beispielsweise in US-PS 5 844 028 beschrieben.

Phosphazene sind Verbindungen der Formeln (VIa) und (VIb) 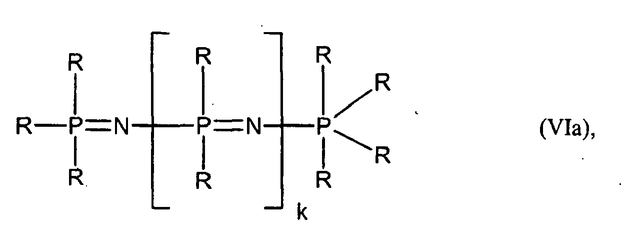 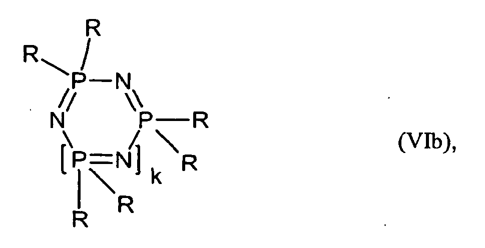
- R: jeweils gleich oder verschieden ist und für Amino, jeweils gegebenenfalls halogeniertes, vorzugsweise mit Fluor halogeniertes C₁ bis C₈-Alkyl, oder C₁ bis C₈-Alkoxy, jeweils gegebenenfalls durch Alkyl, vorzugsweise C₁ bis C₄-Alkyl, und/oder Halogen, vorzugsweise Chlor und/oder Brom, substituiertes C₅ bis C₆-Cycloalkyl, C₆ bis C₂₀-Aryl, vorzugsweise Phenyl oder Naphthyl, C₆ bis C₂₀-Aryloxy, vorzugsweise Phenoxy, Naphthyloxy, oder C₇ bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehr Reste in den Formeln (Ia) und (Ib) können verschieden sein. Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden. Das Phosphor enthaltende Flammschutzmittel kann in einer Menge von 0,1 bis 30, vorzugsweise 1 bis 25 und in am meisten bevorzugter Weise 2 bis 20 Gewichtsteilen in der erfindungsgemäßen Zusammensetzung eingesetzt werden.

### Komponente F

Die Flammschutzmittel entsprechend Komponente E werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt. Die fluorierten Polyolefine sind im allgemeinen in einer Menge von 0,01 bis 3, vorzugsweise 0,05 bis 1,5 Gew.-Teilen in der Mischung enthalten.

Fluorierte Polyolefine sind bekannt und beispielsweise in der EP-A 0 640 655 beschrieben. Sie werden unter der Marke Teflon^{®} beispielsweise Teflon 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.-%, vorzugsweise 7 bis 60 Gew.-%.

### Komponente G

Darüber hinaus kann die Zusammensetzung weitere übliche Polymeradditive (Komponente G) wie Flammschutzmittel, Gleit- und Entformungsmittel, beispielsweise Pentaerythrittetrastearat, Nukleiermittel, Antistatika, Stabilisatoren, Füll- und Verstärkungsstoffe (beispielsweise Glas- oder Karbonfasern; Glimmer, Kaolin, Talk, CaCO₃ und Glasschuppen) sowie Farbstoffe und Pigmente enthalten.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform wird
(i) in einem ersten Schritt die Schichtverbindung mittels eines lösungsmittelfreien Schmelzeprozesses mit Polyalkylenoxide mit einem zahlenmittleren Molekulargewicht von 106 bis 20000 g/mol, bevorzugt von 200 bis 10000 g/mol, wobei auch Mischungen verschiedener Polyalkylenoxide eingesetzt werden können, modifiziert,
(ii) in einem zweiten Schritt der aus (i) erhaltene Schichtverbindung-Masterbatch mit der Komponente (A) und gegebenenfalls weiteren Komponenten ausgewählt aus der Gruppe aus (B), (C), (E), (F) und (G) in bekannter Weise vermischt und
(iii) in einem dritten Schritt die Mischung aus (ii) bei Temperaturen von 200°C bis 300°C in üblichen Aggregaten wie Innenknetern, Extrudern und Doppelwellenschnecken schmelzcompoundiert und schmelzextrudiert,
wobei der im ersten Schritt (i) resultierende Schichtverbindung-Masterbatch isoliert werden kann oder auch direkt als Schmelze, vorzugsweise mit einem Seitenextruder, in die Formmasse in Schritt (ii) verarbeitet werden kann.

In einer besonders bevorzugten Ausführungsform werden im ersten Schritt (i) weitere Oligomere oder Polymere ausgewählt aus der Gruppe bestehend aus Polycarbonat (gemäß Komponente A) und Polymethylmethacrylat (PMMA) eingesetzt.

Die erfindungsgemäßen thermoplastischen Formmassen eignen sich aufgrund ihrer hohen thermischen Stabilität und ihrer guten mechanischen Eigenschaften zur Herstellung von Formkörpern jeglicher Art, insbesondere solchen mit erhöhten Anforderungen an die maximale Wärmefreisetzungsgeschwindigkeiten.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A1

### Verzweigtes Polycarbonat auf Basis Bisphenol A mit einer relativen Lösungs viskosität von 1,34 gemessen in Methylenchlorid bei 25°C und in einer Konzentration von 0,5 g/100ml

### Komponente A2

Lineares Polycarbonat auf Basis Bisphenol A mit einer relativen Lösungs viskosität von 1,20 gemessen in Methylenchlorid bei 25°C und in einer Konzentration von 0,5g/100ml

### Komponente B

ABS-Polymerisat, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks (mittlerer Teilchendurchmesser d₅₀ = 0,35 µm).

### Komponente D1

Kationisch modifiziertes Schichtsilicat (modifiziert mit Stearylbenzyldimethylammoniumchlorid) (Nanofil 9, Pulver, spezifisches Gewicht ca. 1,8 g/cm³, mittlere Partikelgröße 8 µm, Primärteilchengröße bei vollständiger Dispergierung ca. 100-500 nm x 1 nm, Hersteller Fa. Süd-Chemie AG).

### Komponente D2:

### Schichtsilicat-Polycarbonat-Masterbatch (erfindungsgemäß)

Für die Herstellung des Schichtsilicat-Polycarbonat-Masterbatches werden die in Tabelle 1 aufgeführten Einsatzstoffe in einem 10ml-Mikro-Extruder (Fa. DSM) bei 240°C für 5 Minuten geknetet, abgelassen und auf Raumtemperatur abgekühlt.

**Tabelle 1**

| Herstellung des Schichtsilicat-Polycarbonat-Masterbatches | |
|---|---|
| Komponente | Einwaage [g] |
| A2 | 4,4 |
| D2-1 | 5,5 |
| D2-2 | 0,8 |
| D2-3 | 0,3 |
| G3 | 1,15*10⁻³ |

### Komponente D2-1

Nanofil 757 (hochreiner Natrium-Montmorillonit, Pulver, spezifisches Gewicht ca. 2,6 g/cm³, mittlere Partikelgröße < 10 µm, Primärteilchengröße bei vollständiger Dispergierung ca. 500 nm x 1 nm, Hersteller Fa. Süd-Chemie AG). Mittels TEM-Aufnahme und XRD-Messungen wurden die Ausmaße ermittelt: mittlere Schichtdicke von 1 nm und Schichtdurchmesser von ca. 300 - 1000 nm.

### Komponente D2-2

Poly-(ethylenglykol)-monomethylether (durchschnittliches Molekulargewicht (Zahlenmittel) Mn = 350 g/mol) (Fa. Sigma-Aldrich Chemie)

### Komponente D2-3

Polyethylenglykol-monomethylether (durchschnittliches Molekulargewicht (Zahlenmittel) Mn 2000) (Fa. Sigma-Aldrich Chemie)

### Komponente E

Bisphenol-A basierendes Oligophosphat

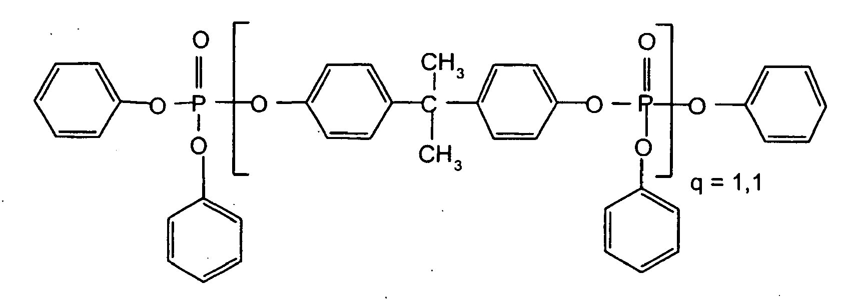

### Komponente F

Polytetrafluorethylen-Pulver, CFP 6000 N, Fa. Du Pont.
**Komponente G1 :** Pentaerythrittetrastearat
**Komponente G2 :** Phosphit-Stabilisator
**Komponente G3 :** Tetraphenylphosphoniumphenolat

### Herstellung und Prüfung der erfindunespemäßen Formmassen

Auf einem Zweischneckenextruder (ZSK-25) (Fa. Werner und Pfleiderer) werden die in Tabelle 2 aufgeführten Einsatzstoffe bei einer Drehzahl von 225 Upm und einem Durchsatz von 20 kg/h bei einer Maschinentemperatur von 260°C compoundiert und granuliert. Die Gesamt-Ansatzgröße beträgt jeweils 8 kg. Beispiel 1 stellt den Vergleich dar ohne Schichtsilicat-Zusatz, Beispiel 2 enthält als Vergleich ein kommerziell erhältliches kationisch modifiziertes Schichtsilicat, und Beispiel 3 enthält den zuvor beschriebenen Schichtsilicat-Polycarbonat-Masterbatch.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s) und gemäß ISO 1133 (MVR), ISO 5660-1 (Cone-Kalorimetrie) und ASTM E 662 (Rauchgasdichte) und mittels Thermogravimetrischer Analyse (TGA) charakterisiert.

Die Bestimmung der Schmelzvolumenfließrate (MVR-Wert, Melt volume-flow rate) wird gemäß ISO 1133 (260 °C; 5 kg) durchgeführt.

Die Bestimmung der Cone-Kalorimetermessung (50 kW/m², 60 mm Abstand) erfolgt gemäß ISO 5660-1.

Die Bestimmung der Rauchgasdichte erfolgt gemäß ASTM E 662 (mit Zündflamme d= 3 mm).

Die Durchführung der Thermogravimetrischen Analyse (TGA) erfolgte mit einer TGA/SDTA 851e (Mettler-Toledo). Ca. 10 mg der Proben wurden eingewogen und unter einer Gasmischung von 20% Sauerstoff in Helium mit einem Durchfluss von 80 ml/min 30 min bei 25°C gespült und anschließend auf 800°C mit einer Heizrate von 5K/min aufgeheizt. Während der gesamten Messung wurden kontinuierlich die Gewichtsänderung verfolgt und im Massenspektrometer die Massen aufgenommen. In Tabelle 2 ist der Temperaturbereich für die Zersetzung angegeben, der aus der gemessenen prozentualen Gewichtsabnahme bzw. Gewichtsverlustrate (in % min⁻¹) entnommen wurde. Der Anfangswert entspricht dem Beginn der Zersetzung, der Endwert dem Ende der Zersetzung.

**Tabelle 2**

| Zusammensetzung und Eigenschaften der Formmassen | | | |
|---|---|---|---|
| **Komponente (Gew.-%)** | **1** **(Vergleich)** | **2** **(Vergleich)** | **3** |
| A1 | 84,80 | 80,95 | 79,80 |
| B | 4,70 | 4,70 | 4,70 |
| D1 | - | 3,85 | - |
| D2 | - | - | 5,00 |
| E | 10,10 | 10,10 | 10,10 |
| F | 0,10 | 0,10 | 0,10 |
| G1 | 0,20 | 0,20 | 0,20 |
| G2 | 0,10 | 0,10 | 0,10 |
| MVR 260°C/5 kg [cm³/10min] | 13,8 | 92,4 | 15,2 |
| Cone-Kalorimetermessung, Heat Release (Maximum) [kW/m²] | 320,3 | 353,1 | 238,4 |
| MARHE Wert | 133,0 | 173,6 | 142,6 |
| Rauchgasdichte nach ASTM E 662, Ds nach 4 min | 419 | 707 | 357 |
| TGA, Zersetzungstemperatur [°C] | 320 - 625 | 320 - 635 | 340 - 675 |

Aus Tabelle 2 ist ersichtlich, dass durch Zusatz des erfindungsgemäßen Schichtsilicat-Polycarbonat-Masterbatches (Beispiel 3) die Rauchgasdichte nach ASTM E 662 erniedrigt wird, die maximalen Wärmefteisetzungsgeschwindigkeit (Heat Release, ermittelt mittels Cone-Kalorimetrie) verringert wird und darüber hinaus die Zersetzungstemperatur (thermögravimetrische Analyse) erhöht wird, wobei die Schmelzvolumenfließrate (MVR-Wert) gegenüber der ungefüllten Formmasse (Vergleichsbeispiel 1) im Rahmen der Messgenauigkeit unverändert bleibt.

Darüber hinaus wird gegenüber der Verwendung von kationisch modifizierten Schichtsilicaten (Vergleichsbeispiel 2) ein niedrigerer MARHE-Wert erreicht (MARHE = Maximum Average Rate of Heat Emission; maximale mittlere Wärmeemission). Die Formmasse gemäß Vergleichsbeispiel 2 enthaltend kationisch modifiziertes Schichtsilicat ergibt einen deutlich erhöhten MVR-Wert im Vergleich zu Vergleichsbeispiel 1 und erfindungsgemäßen Beispiel 3, was einen erhöhten Molekulargewichtsabbau der Polycarbonatmatrix indiziert.

## Patentansprüche

1. Zusammensetzung enthaltend
A) ein aromatisches Polycarbonat und/oder Polyestercarbonat,
B) gegebenenfalls einen Schlagzähmodifikator,
C) gegebenenfalls ein thermoplastisches Homo- und/oder Copolymer,
D) eine Schichtverbindung, welche mittels eines lösungsmittelfreien Schmelzeprozesses mit Polyalkylenoxid mit einem zahlenmittleren Molekulargewicht von 106 bis 20000 g/mol modifiziert ist, und
E) gegebenenfalls eine Phosphorverbindung.

2. Zusammensetzung gemäß Anspruch 1 enthaltend
A) 30 bis 99,9 Gew.-Teile aromatisches Polycarbonat und/oder Polyestercarbonat,
B) 0 bis 60 Gew.-Teile eines kautschukmodifizierten Pfroptpolymerisats,
C) 0 bis 30 Gew.-Teile Homo- und/oder Copolymer,
D) 0,1 bis 40 Gew.-Teile einer Schichtverbindung, welche mittels eines lösungsmittelfreien Schmelzeprozesses mit Polyalkylenoxid mit einem zahlenmittleren Molekulargewicht von 106 bis 20000 g/mol modifiziert ist, und
E) 0 bis 30 Gew.-Teile Phosphorverbindung,
wobei die Summe der Gewichtsteile der Komponenten A, B, C, D und E auf 100 normiert ist.

3. Zusammensetzung gemäß Anspruch 1 enthaltend Schichtverbindungen mit einer mittleren Dicke von 0,3 bis 10 nm.

4. Zusammensetzung gemäß Anspruch 3 enthaltend Schichtverbindungen, wobei die Schichten einen Durchmesser von 5 bis 10000 nm aufweisen.

5. Zusammensetzung gemäß einem der Ansprüche 1 bis 4 enthaltend eine Schichtverbindung, welche mittels eines lösungsmittelfreien Schmelzeprozesses mit Polyalkylenoxid mit einein zahlenmittleren Molekulargewicht von 106 bis 20000 g/mol und mindestens einem weiteren Polymer modifiziert ist.

6. Zusammensetzung gemäß einem der Ansprüche 1 bis 5, wobei als Komponente B) ein kautschukmodifiziertes Pfröpfpolymerisat von
B.1 65 bis 95 Gew.-% bezogen auf B) einer Mischung aus
B.1.1 50 bis 99 Gew.-%, bezogen auf B.1) mindestens eines Monomeren ausgewählt aus der Gruppe der Vinylaromaten und kernsubstituierten Vinylaromaten und
B.1.2 1 bis 50 Gew.-%, bezogen auf B.1) mindestens eines Monomeren ausgewählt aus der Gruppe der Vinylcyanide, (Meth)Acrylsäure-(C₁-C₈)-Alkylester und Derivate ungesättigter Carbonsäuren
auf
B.2 5 bis 35 Gew.-% bezogen auf B) einer oder mehrer Pfropfgrundlagen mit einer Glasübergangstemperatur ≤ -10°C
eingesetzt wird.

7. Zusanunensetzung gemäß Anspruch 6, wobei die Monomere B.1.1) Styrol und die Monomere B.1.2) Acrylnitril sind.

8. Zusammensetzung gemäß Anspruch 7, wobei die Pfropfgrundlage B.2) Dienkautschuk enthält.

9. Zusammensetzung gemäß einem der vorangegangenen Ansprüche enthaltend ein (Co)Polymerisat aus
C.1 50 bis 99 Gew.-% bezogen auf das (Co)Polymerisat mindestens eines Monomeren ausgewählt aus der Gruppe der Vinylaromaten, kernsubstituierten Vinylaromaten und (Meth)Acrylsäure-(C₁-C₈)-Alkylester und
C.2 1 bis 50 Gew.-% bezogen auf das Copolymerisat mindestens eines Monomeren ausgewählt aus der Gruppe der Vinylcyanide, (Meth)Acrylsäure-(C₁-C₈)-Alkylester, ungesättigte Carbonsäuren und Derivate ungesättigter Carbonsäuren.

10. Zusammensetzung nach einem der Ansprüche 1 bis 9, worin zur Modifizierung der Schichtverbindung mittels eines lösungsmittelfreien Schmelzeprozesses
(1) in einem ersten Schritt die Schichtverbindung mit Polyalkylenoxid mit einem zahlenmittleren Molekulargewicht von 106 bis 20000 g/mol oder einer Mischung aus Polyalkylenoxid mit einem zahlenmittleren Molekulargewicht von 106 bis 20000 g/mol und mindestens einem weiteren organischen Polymere vermischt wird,
(2) in einem zweiten Schritt die Mischung auf eine Temperatur oberhalb der Schmelztemperatur des eingesetzten Polyalkylenoxids mit einem zahlenmittleren Molekulargewicht von 106 bis 20000 mol bzw. der eingesetzten Polymermischung aus Polyalkylenoxid mit einem zahlenmittleren Molekulargewicht von 106 bis 20000 g/mol und mindestens einem weiteren organischen Polymer erhitzt wird.

11. Zusammensetzung gemäß einem der vorangegangenen Ansprüche enthaltend Additive ausgewählt aus mindestens einem aus der Gruppe der Flammschutzmittel, Antidrippingmittel, Gleit- und Entformungsmittel, Nukleiermittel, Antistatika, Stabilisatoren, Füll- und Verstärkungsstoffe, Farbstoffe und Pigmente.

12. Verfahren zur Herstellung thermoplastischer Formmassen aus Zusammensetzungen gemäß einem der vorangegangenen Ansprüche **dadurch gekennzeichnet, dass**
(i) in einem ersten Schritt die Schichtverbindung mittels eines lösungsmittelfreien Schmelzeprozesses mit Polyalkylenoxid mit einem zahlenmittleren Molekulargewicht von 106 bis 20000 g/mol modifiziert wird,
(ii) in einem zweiten Schritt der aus (i) erhaltene Schichtverbindung-Masterbatch mit der Komponenten (A) und gegebenenfalls weiteren Komponenten ausgewählt aus der Gruppe aus (B), (C), (E), (F) und (G) vermischt wird und
(iii) in einem dritten Schritt die Mischung aus (ii) bei Temperaturen von 200°C bis 300°C schmelzcompoundiert und schmelzextrudiert wird.

13. Verwendung der Zusammensetzungen gemäß einem der Ansprüche 1 bis 11 zur Herstellung von Formkörpern.

14. Formkörper, enthaltend eine Zusammensetzung nach einem der Ansprüche 1 bis 11.

15. Formkörper nach Anspruch 14 **dadurch gekennzeichnet, dass** der Formkörper ein Teil eines Kraftfahrzeugs, Schienenfahrzeugs, Luftfahrzeugs oder Wasserfahrzeugs oder ein Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen oder ein Gehäuse für Gartengeräte ist.

## Claims

1. Composition comprising
A) an aromatic polycarbonate and/or polyester carbonate,
B) optionally an impact modifier,
C) optionally a thermoplastic homo- and/or copolymer,
D) a laminar compound which is modified with polyalkylene oxide having a number-average molecular weight of from 106 to 20,000 g/mol by means of a solvent-free melt process and
E) optionally a phosphorus compound.

2. Composition according to claim 1, comprising
A) 30 to 99.9 parts by wt. of aromatic polycarbonate and/or polyester carbonate,
B) 0 to 60 parts by wt. of a rubber-modified graft polymer,
C) 0 to 30 parts by wt. of homo- and/or copolymer,
D) 0.1 to 40 parts by wt. of a laminar compound which is modified with polyalkylene oxide having a number-average molecular weight of from 106 to 20,000 g/mol by means of a solvent-free melt process and
E) 0 to 30 parts by wt. of phosphorus compound,
wherein the sum of the parts by weight of components A, B, C, D and E is standardized to 100.

3. Composition according to claim 1, comprising laminar compounds having an average thickness of from 0.3 to 10 nm.

4. Composition according to claim 3, comprising laminar compounds wherein the layers have a diameter of from 5 to 10,000 nm.

5. Composition according to one of claims 1 to 4, comprising a laminar compound which is modified with polyalkylene oxide having a number-average molecular weight of from 106 to 20,000 g/mol and at least one further polymer by means of a solvent-free melt process.

6. Composition according to one of claims 1 to 5, wherein a rubber-modified graft polymer of
B.1 65 to 95 wt. %, based on B), of a mixture of
B.1.1 50 to 99 wt. %, based on B.1), of at least one monomer chosen from the group consisting of vinylaromatics and nucleus-substituted vinylaromatics and
B.1.2 1 to 50 wt. %, based on B.1), of at least one monomer chosen from the group consisting of vinyl cyanides, (meth)acrylic acid (C₁-C₈)-alkyl esters and derivatives of unsaturated carboxylic acids
on
B.2 5 to 35 wt. %, based on B), of one or more graft bases having a glass transition temperature of <-10°C
is employed as component B).

7. Composition according to claim 6, wherein the monomers B.1.1) are styrene and the monomers B.1.2) are acrylonitrile.

8. Composition according to claim 7, wherein the graft base B.2) comprises diene rubber.

9. Composition according to one of the preceding claims, comprising a (co)polymer of
C.1 50 to 99 wt. %, based on the (co)polymer, of at least one monomer chosen from the group consisting of vinylaromatics, nucleus-substituted vinylaromatics and (meth)acrylic acid (C₁-C₈)-alkyl esters and
C.2 1 to 50 wt. %, based on the copolymer, of at least one monomer chosen from the group consisting of vinyl cyanides, (meth)acrylic acid (C₁-C₈)-alkyl esters, unsaturated carboxylic acids and derivatives of unsaturated carboxylic acids.

10. Composition according to one of claims 1 to 9, wherein for modification of the laminar compound by means of a solvent-free melting process
(1) in a first step the laminar compound is mixed with polyalkylene oxide having a number-average molecular weight of from 106 to 20,000 g/mol or a mixture of polyalkylene oxide having a number-average molecular weight of from 106 to 20,000 g/mol and at least one further organic polymer,
(2) in a second step the mixture is heated to a temperature above the melting temperature of the polyalkylene oxide employed, having a number-average molecular weight of from 106 to 20,000 g/mol, or of the polymer mixture employed, of polyalkylene oxide having a number-average molecular weight of from 106 to 20,000 g/mol and at least one further organic polymer.

11. Composition according to one of the preceding claims, comprising additives chosen from at least one from the group consisting of flameproofing agents, antidripping agents, lubricants and mould release agents, nucleating agents, antistatics, stabilizers, fillers and reinforcing substances and dyestuffs and pigments.

12. Process for the preparation of thermoplastic moulding compositions from compositions according to one of the preceding claims, **characterized in that**
(i) in a first step the laminar compound is modified with polyalkylene oxide having a number-average molecular weight of from 106 to 20,000 g/mol by means of a solvent-free melt process,
(ii) in a second step the laminar compound masterbatch obtained from (i) is mixed with component (A) and optionally further components chosen from the group consisting of (B), (C), (E), (F) and (G) and
(iii) in a third step the mixture from (ii) is subjected to melt compounding and melt extrusion at temperatures of from 200 °C to 300 °C.

13. Use of the compositions according to one of claims 1 to 11 for the production of shaped articles.

14. Shaped articles comprising a composition according to one of claims 1 to 11.

15. Shaped article according to claim 14, **characterized in that** the shaped article is a part of a motor vehicle, track vehicle, aircraft or water-craft or a housing of electrical equipment containing small transformers, housing for equipment for processing and transmission of information, housing and facing of medical equipment, massage equipment and housing therefor, toy vehicles for children, flat wall elements, housing for safety equipment, thermally insulated transportation containers, mouldings for sanitary and bath fittings, cover grating for ventilator openings or a housing for garden equipment.

## Revendications

1. Composition contenant
A) un polycarbonate et/ou polyestercarbonate aromatique,
B) éventuellement un agent de modification de la résistance au choc,
C) éventuellement un homo- et/ou copolymère thermoplastique,
D) un composé de couche, lequel est modifié au moyen d'un procédé de fusion exempt de solvant avec du poly(oxyde d'alkylène) ayant une masse moléculaire moyenne en nombre de 106 à 20 000 g/mol, et
E) éventuellement un composé de phosphore.

2. Composition selon la revendication 1 contenant
A) de 30 à 99,9 parties en masse de polycarbonate et/ou polyestercarbonate aromatique,
B) de 0 à 60 parties en masse d'un polymère greffé caoutchouc-modifié,
C) de 0 à 30 parties en masse d'homo- et/ou copolymère,
D) de 0,1 à 40 parties en masse d'un composé de couche, lequel est modifié au moyen d'un procédé de fusion exempt de solvant avec du poly(oxyde d'alkylène) ayant une masse moléculaire moyenne en nombre de 106 à 20 000 g/mol, et
E) de 0 à 30 parties en masse de composé de phosphore,
la somme des parties en masse des constituants A, B, C, D et E étant normée à 100.

3. Composition selon la revendication 1 contenant des composés de couche avec une épaisseur moyenne de 0,3 à 10 nm.

4. Composition selon la revendication 3 contenant des composés de couche, les couches présentant un diamètre de 5 à 10 000 nm.

5. Composition selon l'une quelconque des revendications 1 à 4 contenant un composé de couche, lequel est modifié au moyen d'un procédé de fusion exempt de solvant avec du poly(oxyde d'alkylène) ayant une masse moléculaire moyenne en nombre de 106 à 20 000 g/mol, et au moins un autre polymère.

6. Composition selon l'une quelconque des revendications 1 à 5, dans laquelle on utilise comme constituant B) un polymère greffé caoutchouc-modifié de
B.1 de 65 à 95 % en masse rapporté à B) d'un mélange constitué de
B.1.1 de 50 à 99 % en masse, rapporté à B.1) d'au moins un monomère choisi dans le groupe constitué de composés aromatiques vinyliques et de composés aromatiques vinyliques substitués au noyau et
B.1.2 de 1 à 50 % en masse rapporté à B.1) d'au moins un monomère choisi dans le groupe constitué de cyanures vinyliques, d'esters alkyliques en C₁-C₈ d'acide (méth)acrylique et de dérivés d'acides carboxyliques insaturés
sur
B.2 de 5 à 35 % en masse rapporté à B) d'une ou plusieurs bases de greffage avec une température de transition vitreuse < -10°C.

7. Composition selon la revendication 6, dans laquelle le monomère B.1.1) est le styrène et les monomères B.1.2) sont l'acrylonitrile.

8. Composition selon la revendication 7, dans laquelle la base de greffage B.2) contient un caoutchouc de diène.

9. Composition selon l'une quelconque des revendications précédentes contenant un (co)polymère constitué de
C.1 de 50 à 99 % en masse rapporté au (co)polymère d'au moins un monomère choisi dans le groupe constitué de composés aromatiques vinyliques, de composés aromatiques vinyliques substitués au noyau et d'esters alkyliques en C₁-C₈ d'acide (méth)acrylique et
C.2 de 1 à 50 % en masse rapporté au copolymère d'au moins un monomère choisi dans le groupe constitué de cyanures vinyliques, d'esters alkyliques en C₁-C₈ d'acide (méth)acrylique, d'acides carboxyliques insaturés et de dérivés d'acides carboxyliques insaturés.

10. Composition selon l'une quelconque des revendications 1 à 9, dans laquelle pour la modification du composé de couche au moyen d'un procédé de fusion exempt de solvant
(1) on mélange dans une première étape le composé de couche avec du poly(oxyde d'alkylène) ayant une masse moléculaire moyenne en nombre de 106 à 20 000 g/mol ou un mélange constitué de poly(oxyde d'alkylène) ayant une masse moléculaire moyenne en nombre de 106 à 20 000 g/mol et d'au moins un autre polymère organique,
(2) on chauffe dans une seconde étape le mélange à une température supérieure à la température de fusion du poly(oxyde d'alkylène) utilisé ayant une masse moléculaire moyenne en nombre de 106 à 20 000 g/mol respectivement du mélangé polymère utilisé constitué de poly(oxyde d'alkylène) ayant une masse moléculaire moyenne en nombre de 106 à 20 000 g/mol et d'au moins un autre polymère organique.

11. Composition selon l'une quelconque des revendications précédentes contenant des additifs choisis parmi au moins un du groupe constitué des agents ignifuges, des agents anti-gouttes, des agents lubrifiants et de démoulage, des agents de nucléation, des antistatiques, des stabilisateurs, des matières de charges et de renforcement, des colorants et des pigments.

12. Procédé pour la préparation de matières de moulage thermoplastiques à partir de compositions selon l'une quelconque des revendications précédentes, **caractérisé en ce que**
(i) on modifie dans une première étape le composé de couche au moyen d'un procédé de fusion exempt de solvant avec du poly(oxyde d'alkylène) ayant une masse moléculaire moyenne en nombre de 106 à 20 000 g/mol,
(ii) on mélange dans une seconde étape le lot-mère de composé de couche obtenu dans (i) avec le constituant (A) et éventuellement d'autres constituants choisis dans le groupe constitué de (B), (C), (E), (F) et (G) et
(iii) on combine à l'état de fusion et on extrude à l'état de fusion dans une troisième étape le mélange de (ii) à des températures de 200°C à 300°C.

13. Utilisation des compositions selon l'une quelconque des revendications 1 à 11 pour la préparation de corps moulés.

14. Corps moulés contenant une composition selon l'une quelconque des revendications 1 à 11.

15. Corps moulés selon la revendication 14, **caractérisé en ce que** les corps moulés sont une pièce d'un véhicule automobile, d'un train, d'un avion ou d'un bateau ou un boîtier d'appareils électroménagers contenant de petits transformateurs, un boîtier destiné à des appareils pour le traitement et la transmission de l'information, un boîtier et un habillage d'appareils médicaux, d'appareils de massage et un boîtier destiné à ceux-ci, des véhicules de jouets pour enfants, des éléments de parois planes, des boîtiers destinés à des installations de sécurité, des récipients de transport thermo-isolés, des pièces moulées destinées à des équipements sanitaires et de bain, des plaques grillagées pour ouvertures de ventilateurs ou un boîtier pour des appareils de jardinage.
